# EUROPÄISCHE PATENTSCHRIFT

(11) **EP 2 414 211 B1**
(45) Veröffentlichungstag und Bekanntmachung des Hinweises auf die Patenterteilung: **09.01.2013**
(21) Anmeldenummer: 10711420.9
(22) Anmeldetag: 30.03.2010
(51) Int. Cl.: B62D 5/00, B62D 5/04, B62D 1/185, B62D 1/19

(54) **LENKSÄULE FÜR KRAFTFAHRZEUGE**
STEERING COLUMN FOR MOTOR VEHICLES
COLONNE DE DIRECTION POUR VÉHICULES À MOTEUR

(30) Priorität: 01.04.2009 DE 102009017054
(43) Veröffentlichungstag der Anmeldung: 08.02.2012
(73) Patentinhaber: Leopold Kostal GmbH & Co. KG, 58513 Lüdenscheid (DE)
(72) Erfinder: HOOG, Thorsten, 45701 Herten (DE); HIRSCHFELD, Klaus, 58515 Lüdenscheid (DE); VOM HEDT, Bernd, 58093 Hagen (DE); SCHIRP, Christian, 44789 Bochum (DE); SCHMID, Oliver, 71732 Tamm (DE)
(74) Vertreter: Kerkmann, Detlef
(86) Internationale Anmeldenummer: PCT/EP2010/054222
(87) Internationale Veröffentlichungsnummer: WO 2010/112512

(56) Entgegenhaltungen:
- EP-A2- 1 862 371
- EP-A2- 1 985 521
- WO-A1-2010/015565
- DE-A1- 10 249 718

## Beschreibung

Die Erfindung betrifft eine Lenksäule für Kraftfahrzeuge nach dem Oberbegriff des Anspruchs 1.

Es sind Lenksäulen bekannt, die Teil von sogenannten Steer-by-Wire-Lenkeinrichtungen sind. Bei solchen Lenkeinrichtungen wird durch wenigstens einen Sensor die Drehwinkelstellung des Lenkrades erfasst und einer Auswerteeinheit zugeführt, die wenigstens einen Aktor ansteuert, mit dem die gelenkten Räder betätigt werden. Damit der Fahrer trotz einer solchen Lenkeinrichtung eine haptische Rückmeldung bezüglich des Lenkvorganges erhält, ist die bekannte Lenksäule mit einem Aktuator versehen, dessen Aktuatorwelle mit der Lenkspindel drehfest verbunden ist. Die Herstellung einer solchen Lenksäule ist umständlich und schwierig, da insbesondere die Achsen der Aktuatorwelle und der Lenkspindel genau fluchtend ausgerichtet sein müssen, um das Auftreten von Unrundheiten beim Drehen der Lenkspindel zu vermeiden.

Aus der EP 1 862 371 A2 ist eine Lenksäule gemäß dem Oberbegriff des Hauptanspruchs bekannt. Hierbei handelt es sich um eine elektrische Servolenkvorrichtung mit einem Lenkunterstützungsmotor, dessen Motorwelle einen Teil einer mehrteiligen Lenkspindel ausbildet, wobei die Teile der Lenkspindel relativ zueinander verschiebbar sind.

Der Erfindung liegt die Aufgabe zugrunde, die gattungsgemäße Lenksäule so auszubilden, dass sie in einfacher Weise montiert bzw. hergestellt werden kann und eine kurze axiale Baulänge der gesamten Lenksäule bewirkt.

Diese Aufgabe wird bei der gattungsgemäßen Lenksäule erfindungsgemäß mit den kennzeichnenden Merkmalen des Anspruchs 1 gelöst.

Bei der erfindungsgemäßen Lenksäule bildet der obere Lenkspindelteil die Aktuatorwelle. Dadurch baut die erfindungsgemäße Lenksäule sehr kurz, so dass die Lenksäule weniger Einbauraum im Kraftfahrzeug benötigt.

Zur geringen Baulänge der Lenksäule trägt bei, wenn der obere Lenkspindelteil mit einer axialen Vertiefung versehen ist, die zu einem Ende hin offen ist und in die der untere Lenkspindelteil eingreift. Die Länge der Vertiefung bestimmt das Verstellmaß, um das die Lenksäule in ihrer Länge zur Anpassung an unterschiedlich große Fahrer im Kraftfahrzeug angepasst werden kann.

Der untere Lenkspindelteil liegt vorteilhaft unter Verwendung wenigstens eines Gleitelementes an der Innenwand dieser Vertiefung an. Dieses Gleitelement erlaubt ein problemloses axiales Verschieben der beiden Lenkspindelteile relativ zueinander bei der Längeneinstellung der Lenkspindel.

Der obere Lenkspindelteil ist vorteilhaft in einem Gehäuse untergebracht, das relativ zum unteren Lenkspindelteil in dessen Achsrichtung verschiebbar ist. Auf diese Weise kann der obere Lenkspindelteil zusammen mit diesem Gehäuse bei der Längeneinstellung der Lenkspindel einfach verschoben werden.

Vorteilhaft greift das Gehäuse mit einem Rohransatz in ein Lagerrohr ein, das vorteilhaft in einem weiteren Gehäuse drehbar gelagert ist. Das drehbare Lagerrohr stellt sicher, dass beim Drehen des mit der Lenkspindel drehfest verbundenen Lenkrades die Lenkspindel zuverlässig gedreht werden kann.

Das Lagerrohr ist vorteilhaft mit dem unteren Lenkspindelteil drehfest verbunden. Wird das Lenkrad gedreht, dann wird über die beiden drehfest miteinander verbundenen Lenkspindelteile auch das Lagerrohr im weiteren Gehäuse gedreht. In diesem weiteren Gehäuse lässt sich das Lagerrohr problemlos drehlagern.

Bei einer vorteilhaften Ausführungsform ist der Rohransatz des ersten Gehäuses mit wenigstens einem Gleitelement versehen, mit dem der Rohransatz an der Innenwand des Lagerrohres liegt. Bei einem Crashfall wird über das Lenkrad der obere Lenkspindelteil axial verschoben. Das Gleitelement stellt hierbei sicher, dass der Rohransatz gegenüber dem Lagerrohr entsprechend verschoben werden kann.

Bei einer bevorzugten Ausführungsform ist das weitere Gehäuse fahrzeugfest angeordnet, kann somit nicht relativ zum Fahrzeug verschoben werden.

Der Aktuator ist vorteilhaft ein elektronisch kommutierter Gleichstrommotor.

Der obere Lenkspindelteil bildet in diesem Falle einen Teil eines Rotors dieses Gleichstrommotores.

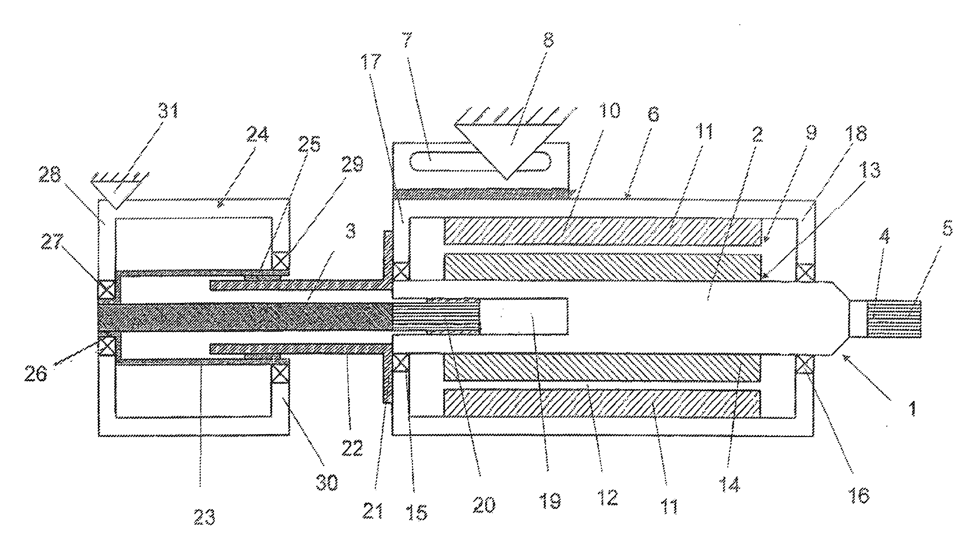

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt in schematischer Darstellung und im Axialschnitt eine erfindungsgemäße Lenksäule.

Die Lenksäule ist für eine Kraftfahrzeug-Steer-by-Wire-Lenkeinrichtung vorgesehen, bei der die Räder eines Kraftfahrzeuges durch Aktoren gelenkt werden, die durch die hier beschriebene zweite Aktuator/Sensoreinheit angesteuert werden. Die Lenksäule hat eine Lenkspindel 1, die einen oberen Lenkspindelteil 2 und einen drehfest mit ihm verbundenen unteren Lenkspindelteil 3 aufweist. Der obere Lenkspindelteil 2 weist ein Anschlussende 4 auf, das mit einem (nicht dargestellten) Lenkrad des Kraftfahrzeuges verbunden werden kann. Das Anschlussende 4 hat vorteilhaft eine Verzahnung 5, mit der eine zuverlässige drehfeste Verbindung mit dem Lenkrad gewährleistet ist. Der obere Lenkspindelteil 2 ragt in ein Gehäuse 6, das kraftfahrzeugseitig begrenzt in Achsrichtung des Lenkspindelteiles 2 verschiebbar ist. Das Gehäuse 6 ist außenseitig mit einer entsprechenden Längsführung 7 versehen, das die begrenzte Verschiebbarkeit gegenüber einem kraftfahrzeugseitigen Anbindungspunkt 8 ermöglicht.

Im Gehäuse 6 ist ein Antriebsmotor 9 untergebracht, der vorteilhaft eine Synchronmaschine ist. Er hat einen Stator 10 mit einem Spulenpaket 11, der an der Innenseite des Gehäuses 6 befestigt ist. Der Stator 10 umgibt unter Bildung eines Ringspaltes 12 einen Rotor 13. Er hat Permanentmagnete 14, die am Rotor 13 befestigt sind. Der Rotor 13 ist am oberen Lenkspindelteil 2 befestigt. Der obere Lenkspindelteil 2 bildet somit die Rotor- bzw. Motorwelle des Antriebsmotors 9. Im Gehäuse 6 ist der obere Lenkspindelteil 2 durch Lager 15, 16 drehbar gelagert. Vorteilhaft sind die Drehlager 15, 16 in den Stirnwänden 17, 18 des Gehäuses 6 angeordnet.

Der obere Lenkspindelteil 2 ist an seinem vom Anschlussende 4 abgewandten Ende mit einer axial verlaufenden Ausnehmung 19 versehen, in die der untere Lenkspindelteil 3 eingreift. Er ist unter Zwischenlage wenigstens eines ringförmigen Gleitelementes 20 drehfest mit dem oberen Lenkspindelteil 2 verbunden.

An der Stirnwand 17 des Gehäuses 6 ist mittels eines Ringflansches 21 ein Rohr 22 befestigt, das den unteren Lenkspindelteil 3 mit radialem Abstand umgibt und dessen Achse in der Achse der Lenkspindel 1 liegt. Der Innendurchmesser des Rohres 22 ist kleiner als der Außendurchmesser des oberen Lenkspindelteils 2. Dadurch wird in einfacher Weise eine Axialsicherung des oberen Lenkspindelteils 2 erreicht. Das Rohr 22 ragt in ein Lagerrohr 23, das drehbar in einem Gehäuse 24 gelagert ist. Das Rohr 22 liegt unter Zwischenlage wenigstens eines ringförmigen Gleitelementes 25 an der Innenwand des Lagerrohres 23 an. Das Lagerrohr 23 ist an seinem vom Gehäuse 6 abgewandten Ende im Durchmesser so verringert, dass es am freien Ende des unteren Lenkspindelteiles 3 anliegt. Dieser im Durchmesser verringerte Endbereich 26 des Lagerrohres 23 ist durch wenigstens ein Lager 27 drehbar im Gehäuse 24 abgestützt. Vorteilhaft befindet sich das Lager 27 in einer Stirnwand 28 des Gehäuses 24. Das Lagerrohr 23 ist außerdem an seinem anderen, im Durchmesser größeren Ende mit einem weiteren Lager 29 drehbar im Gehäuse 24 abgestützt. Das Lager 29 befindet sich vorteilhaft in einer dem Gehäuse 6 zugewandten Stirnwand 30 des Gehäuses 24. Das Gehäuse 24 ist im Unterschied zum Gehäuse 6 gehäuseseitig fest angeordnet, was durch den ortsfesten Anbindungspunkt 31 angedeutet ist.

Alternativ zur dargestellten Lösung, bei der das Rohr 22 in das Gehäuse 24 eintaucht, ist auch ein äußeres Umgreifen des Rohres 22, das dann als Verlängerung des Gehäuses 6 dargestellt sein kann, um das Gleitelement 25 und das Gehäuse 2 möglich.

Weiterhin ist eine Gestaltung denkbar, bei der die Führung, die durch das Rohr 22 und das Lagerrohr 23 dargestellt wird, durch eine geeignete andere Linearführung - z.B. als Linear-Gleitlager - realisiert werden kann, so dass bei der Gestaltung des Gehäuses 24 größere Freiheitsgrade bestehen.

Zur Einstellung der Länge der Lenkspindel 1 kann der obere Lenkspindelteil 2 axial relativ zum unteren Lenkspindelteil 3 verschoben werden. Die axiale Relativlage zwischen oberem und unterem Lenkspindelteil 2, 3 wird in bekannter Weise arretiert. Die Ausnehmung 19 im oberen Lenkspindelteil 2 ist ausreichend lang, um einen ausreichenden Verstellweg für die individuelle Einstellung der Länge der Lenkspindel 1 zu gewährleisten. Dieser Verstellweg umfasst auch einen Vorhalt für den Weg, den das Gehäuse 6 im Crashfall in Richtung des Gehäuses 24 zurücklegt.

Das Rohr 22 hat bei normalem Einsatz der Lenksäule Abstand vom Endbereich 26 des Lagerrohres 23. Das Gleitelement 25 erlaubt in einem Crashfall, dass das Rohr 22 mit dem Gehäuse 6 relativ zum Gehäuse 24 in Achsrichtung der Lenkspindel 1 verschoben werden kann. Die Kräfte, die notwendig sind, um das Gehäuse 6 in Richtung auf das Gehäuse 24 zu verschieben, können dabei definiert werden durch ein nicht gezeigtes "Crashelement" (Splitterrohr, Wellrohr, auftulpendes Rohr etc.), das zwischen Gehäuse 6 und Gehäuse 24 und/oder im Bereich der schraffiert dargestellten Lage zwischen der Führung 7 und dem Gehäuse 6 angebracht ist. Für die Anordnung des Crashelementes zwischen den Gehäusen 6 und 24 bietet sich eine koaxiale Lage zum Rohr 22 und zum Lenkspindelteil 3 an, es können aber auch im Bereich des Lagerrohrs 23 angebrachte Vorrichtungen Verwendung finden - hier wäre z.B. eine hydraulische Einheit denkbar.

Im oder am Gehäuse 6 ist eine (nicht dargestellte) Ansteuerelektronik vorgesehen, mit der der Antriebsmotor 9 angesteuert werden kann. Die Ansteuerelektronik liefert an die Aktoren der Räder Signale entsprechend dem Lenkwinkel, der Lenkgeschwindigkeit oder anderer Lenkfaktoren.

Da der obere Lenkspindelteil 2 gleichzeitig die Motorwelle bildet, ergeben sich bei der Montage der Lenksäule keine Probleme hinsichtlich der Achsausrichtung von Motorwelle und Lenkspindel. Beim Drehen der Lenkspindel und damit der Motorwelle treten somit keine Unrundheiten aufgrund eines Achsversatzes auf.

## Patentansprüche

1. Lenksäule für Kraftfahrzeuge, mit einer Lenkspindel, die aus einem oberen, mit einem Lenkrad zu verbindenden Lenkspindelteil (2) und einem unteren Lenkspindelteil (3) besteht, wobei die beiden Lenkspindelteile (2, 3) relativ zueinander verschiebbar sind, und mit einem Aktuator (9), der mit einer Aktuatorwelle versehen ist, **dadurch gekennzeichnet, dass** der obere Lenkspindelteil (2) die Aktuatorwelle bildet.

2. Lenksäule nach Anspruch 1, **dadurch gekennzeichnet, dass** der obere Lenkspindelteil (2) eine endseitige axiale Vertiefung (19) aufweist, in die der untere Lenkspindelteil (3) eingreift.

3. Lenksäule nach Anspruch 2, **dadurch gekennzeichnet, dass** der untere Lenkspindelteil (3) unter Zwischenlage wenigstens eines Gleitelementes (20) an der Innenwand der Vertiefung (19) anliegt.

4. Lenksäule nach einem der Ansprüche 1 bis 3, **dadurch gekennzeichnet, dass** der obere Lenkspindelteil (2) in einem Gehäuse (6) untergebracht ist, das relativ zum unteren Lenkspindelteil (3) verschiebbar ist.

5. Lenksäule nach Anspruch 4, **dadurch gekennzeichnet, dass** das Gehäuse (6) mit einem Rohransatz (22) in ein Lagerrohr (23) eingreift.

6. Lenksäule nach Anspruch 5, **dadurch gekennzeichnet, dass** das Lagerrohr (23) in einem weiteren Gehäuse (24) drehbar gelagert ist.

7. Lenksäule nach Anspruch 5 oder 6, **dadurch gekennzeichnet, dass** das Lagerrohr (23) drehfest mit dem unteren Lenkspindelteil (3) verbunden ist.

8. Lenksäule nach einem der Ansprüche 5 bis 7, **dadurch gekennzeichnet, dass** der Rohransatz (22) unter Zwischenlage wenigstens eines Gleitelementes (25) an der Innenwand des Lagerrohres (23) anliegt.

9. Lenksäule nach einem der Ansprüche 6 bis 8, **dadurch gekennzeichnet, dass** das weitere Gehäuse (24) fahrzeugfest angeordnet ist.

10. Lenksäule nach Anspruch 6 oder 7, **dadurch gekennzeichnet, dass** der Rohransatz (22) ein Gleitelement (25) und das weitere Gehäuse (24) umgreift.

11. Lenksäule nach einem der Ansprüche 6 bis 10, **dadurch gekennzeichnet, dass** die Führung des Gehäuses (6) zum weiteren Gehäuse (24) ein Linearlager ist.

12. Lenksäule nach einem der Ansprüche 1 bis 11, **dadurch gekennzeichnet, dass** der Aktuator (9) eine Synchronmaschine ist.

13. Lenksäule nach Anspruch 12, **dadurch gekennzeichnet, dass** der obere Lenkspindelteil (2) Teil eines Rotors des Motors (9) ist.

14. Lenksäule nach einem der Ansprüche 6 bis 13, **dadurch gekennzeichnet, dass** die Crashkräfte durch eine separat von den Verstelleinrichtungen angebrachte Einheit zwischen dem Gehäuse (6) und dem weiteren Gehäuse (24) definiert wird.

15. Lenksäule nach einem der Ansprüche 6 bis 13, **dadurch gekennzeichnet, dass** die Crashkräfte durch eine Einheit im Bereich des vom weiteren Gehäuse (24) eingeschlossenen Bereiches definiert werden.

## Claims

1. Steering column for motor vehicles, having a steering spindle which is composed of an upper steering spindle constituent (2) for connecting to a steering wheel and a lower steering spindle constituent (3), with both of the steering spindle constituents (2, 3) being slideable in relation to each other, and having an actuator (9) which is provided with an actuator shaft, **characterised in that** the upper steering spindle constituent (2) forms the actuator shaft.

2. Steering column according to Claim 1, **characterised in that** the upper steering spindle constituent (2) shows an axial recess (19) at its end in which the lower steering spindle constituent (3) engages.

3. Steering column according to Claim 2, **characterised in that** the lower steering spindle constituent (3) comes to rest on the inner wall of the recess (19) with the interposition of at least one sliding element (20).

4. Steering column according to any of Claims 1 to 3, **characterised in that** the upper steering spindle constituent (2) is accommodated in a housing (6) which can be displaced in relation to the lower steering spindle constituent (3).

5. Steering column according to Claim 4, **characterised in that** the housing (6) engages with a tube socket (22) in a bearing tube (23).

6. Steering column according to Claim 5, **characterised in that** the bearing tube (23) is rotatably supported in a further housing (24).

7. Steering column according to Claim 5 or Claim 6, **characterised in that** the bearing tube (23) is connected in a torque-proof manner to the lower steering spindle constituent (3).

8. Steering column according to any of Claims 5 to 7, **characterised in that** the tube socket (22) comes to rest on the inner wall of the bearing tube (23) with the interposition of at least one sliding element (25).

9. Steering column according to any of Claims 6 to 8, **characterised in that** the further housing (24) is arranged affixed to the vehicle.

10. Steering column according to Claim 6 or Claim 7, **characterised in that** the tube socket (22) encompasses a sliding element (25) and the further housing (24).

11. Steering column according to any of Claims 6 to 10, **characterised in that** the guide of the housing (6) to the further housing (24) is a linear bearing.

12. Steering column according to any of Claims 1 to 11, **characterised in that** the actuator (9) is a synchronous machine.

13. Steering column according to Claim 12, **characterised in that** the upper steering spindle constituent (2) is part of a rotor of the motor (9).

14. Steering column according to any of Claims 6 to 13, **characterised in that** the crash forces are defined by a unit mounted separately from the adjusting devices between the housing (6) and the further housing (24).

15. Steering column according to any of Claims 6 to 13, **characterised in that** the crash forces are defined by a unit within the range of the area encompassed by the further housing (24).

## Revendications

1. Colonne de direction pour véhicules automobiles, avec un arbre de direction, qui est composé d'une partie supérieure d'arbre de direction (2), devant être reliée à un volant, et d'une partie inférieure d'arbre de direction (3), sachant que les deux parties d'arbre de direction (2, 3) peuvent être déplacées l'une par rapport à l'autre, et avec un actionneur (9), qui est pourvu d'un arbre d'actionneur, **caractérisée en ce que** la partie supérieure d'arbre de direction (2) forme l'arbre de l'actionneur.

2. Colonne de direction selon la revendication 1, **caractérisée en ce que** la partie supérieure d'arbre de direction (2) présente une cavité axiale d'extrémité (19), dans laquelle s'engage la partie inférieure d'arbre de direction (3).

3. Colonne de direction selon la revendication 2, **caractérisée en ce que** la partie inférieure d'arbre de direction (3) porte contre la paroi intérieure de la cavité (19), au moins un élément de glissement (20) étant intercalé.

4. Colonne de direction selon l'une des revendications 1 à 3, **caractérisée en ce que** la partie supérieure d'arbre de direction (2) est logée dans un carter (6), qui peut être déplacé par rapport à la partie inférieure d'arbre de direction (3).

5. Colonne de direction selon la revendication 4, **caractérisée en ce que** le carter (6) s'engage, avec un appendice tubulaire (22), dans un tube de support (23).

6. Colonne de direction selon la revendication 5, **caractérisée en ce que** le tube de support (23) est monté en rotation dans un autre carter (24).

7. Colonne de direction selon revendication 5 ou 6, **caractérisée en ce que** le tube de support (23) est relié solidaire en rotation à la partie inférieure d'arbre de direction (3).

8. Colonne de direction selon l'une des revendications 5 à 7, **caractérisée en ce que** l'appendice tubulaire (22) porte contre la paroi intérieure du tube de support (23), au moins un élément de glissement (25) étant intercalé.

9. Colonne de direction selon l'une des revendications 6 à 8, **caractérisée en ce que** l'autre carter (24) est fixé au véhicule automobile.

10. Colonne de direction selon revendication 6 ou 7, **caractérisée en ce que** l'appendice tubulaire (22) enveloppe un élément de glissement (25) et l'autre carter (24).

11. Colonne de direction selon l'une des revendications 6 à 10, **caractérisée en ce que** le dispositif de guidage du carter (6) à l'autre carter (24) est un palier linéaire.

12. Colonne de direction selon l'une des revendications 1 à 11, **caractérisée en ce que** l'actionneur (9) est une machine synchrone.

13. Colonne de direction selon la revendication 12, **caractérisée en ce que** la partie supérieure d'arbre de direction (2) fait partie d'un rotor du moteur (9).

14. Colonne de direction selon l'une des revendications 6 à 13, **caractérisée en ce que** les forces de choc sont définies par une unité, qui est installée, séparée des dispositifs d'ajustement, entre le carter (6) et l'autre carter (24).

15. Colonne de direction selon l'une des revendications 6 à 13, **caractérisée en ce que** les forces de choc sont définies par une unité, dans une section de la zone entourée par l'autre carter (24).
